# EUROPEAN PATENT APPLICATION

(11) **EP 2 093 428 A1**
(43) Date of publication of application: **26.08.2009**
(21) Application number: 09250505.6
(22) Date of filing: 25.02.2009
(51) Int. Cl.: F04D 27/02

(54) **A fan assembly and method of controlling the volume flow rate of fluid through such an assembly**

(30) Priority: 25.02.2008 GB 0803372
(71) Applicant: Vent-Axia Group Limited, Crawley, West Sussex RH10 9YX (GB)
(72) Inventor: Penfold, Timothy David, Haywards Heath West Sussex RH16 4HQ (GB); Saunders, Alan John, Angmering West Sussex BN16 4JZ (GB)
(74) Representative: Locke, Andrew Robert

(57) **Abstract**

A fan assembly (1) comprises a fan housing (3) having a fluid inlet (5) and a fluid outlet (7), a fan-impeller (11) being disposed between the fluid inlet (5) and fluid outlet (7). The fan assembly (1) further comprises pressure sensor means (13) and (15) operative to measure the fluid pressure upstream and downstream of the fan-impeller (11). Control means is operative to process pressure measurements from the pressure sensor means to determine a pressure difference across the fan-impeller and to process the determined pressure difference according to an algorithm to calculate the current volume flow rate of fluid through the fan-impeller (11). The control means is also operative to compare the calculated current volume flow rate with a desired volume flow rate of fluid and, if necessary, to adjust the fan-impeller (11) speed such that the desired volume flow rate of fluid is achieved.

## Description

The present invention relates to a fan assembly and a method of controlling the volume flow rate of fluid through such an assembly. The invention particularly but not exclusively relates to a domestic extractor fan assembly or a domestic heat recovery fan assembly.

Building Regulations in the UK, and the equivalent regulations in other countries, often call for a specific volume flow rate of air to be provided or extracted from a space in a dwelling or other building. Thus it would be convenient for the installer and for the user if a fan assembly providing the flow of air operated in a way that provided a constant volume flow rate of air, independent of the resistance to flow of any ductwork connected to the fan assembly, how blocked any filters are and the position of any dampers or adjustable grilles or the like that may be provided. This would make it easier to set and maintain the required volume flow rate according to the Building Regulations.

Measuring the volume flow of fluid is a well established art, and documents such as BS EN848 and others provide methods for the industry to use. These methods are typically based on measuring the pressure difference upstream and downstream of a flow restricting device such as, for example, an orifice plate or a venturi. However such methods all require a fully developed fluid flow before and after the device as the pressure measurement needs to represent the average pressure at the measuring point. If the fluid flow is turbulent then any specific measuring point is not representative of the whole because the pressure will be varying with time at that point, as it will at all measuring points in the location in question. Thus the convention with such measuring devices is to use them in a duct several duct-diameters away from the fan product. These devices are relatively expensive, not particularly compact and can increase energy consumption.

Other well established flow measuring devices exist that use a principal other than that of measuring pressure differences. For example, a vane anemometer will convert the energy from the fluid flow into mechanical energy causing a rotor to spin. The speed of rotation of the rotor is calibrated with an average air flow. Similarly a hot wire anemometer will cool according to the rate of fluid flow, and again a calibration will relate this to the flow rate itself. Neither of these methods are as accurate or repeatable as pressure difference methods when carried out correctly.

The forward curved centrifugal impeller has a characteristic such that the energy drawn from the impeller is related to the flow of air that the impeller generates. Methods have been proposed to develop an algorithm that uses this characteristic to calculate the flow of air. However, other impeller designs such as axial and backward curved centrifugal impellers do not have the same characteristic and thus cannot be controlled in the same manner.

Because of the universal drive towards greater efficiency of all mechanical and electrical devices it is desirable to use a backward curved impeller, which generally is of the order of 15% more efficient than a forward curved impeller.

It has been observed that some fan assembly installations are of low quality and it would not be prudent to use external fluid flow measuring devices as these will take extra time on site and may themselves not be installed correctly. Such devices may also be relatively expensive.

US 5586861 of Pace Company, USA discloses an airflow measuring centrifugal fan assembly comprising an inlet cone of varying diameter. A pair of pressure measuring devices are provided at spaced apart positions on the inlet cone, upstream of the fan-impeller. A disadvantage of this system is that the spacing of the pressure measuring devices increases the overall dimensions of the device.

JP61065094 of Kubota Limited discloses placing a discrete air flow measuring device, such as a hot wire anemometer, directly in the discharge of the volute of a centrifugal fan assembly. However, this patent discloses the discharge port of the scroll being partially closed which will reduce the efficiency of the fan assembly. Tests have suggested that this method is not of the same order of accuracy as the current invention.

According to a first aspect of the invention there is provided a fan assembly comprising a fan housing having a fluid inlet and a fluid outlet, a fan-impeller being disposed between the fluid inlet and fluid outlet, the fan assembly further comprising pressure sensor means operative to measure the fluid pressure upstream and downstream of the fan-impeller, the fan assembly further comprising control means operative to process pressure measurements from the pressure sensor means to determine a pressure difference across the fan-impeller and to process the determined pressure difference according to an algorithm to calculate the current volume flow rate of fluid through the fan-impeller, the control means being further operative to compare the calculated current volume flow rate with a desired volume flow rate of fluid and, if necessary, to adjust the fan-impeller speed such that the desired volume flow rate of fluid is achieved.

Preferably the algorithm calculates the current volume flow rate from the determined pressure difference and a pre-determined characteristic of the fan-impeller.

Preferably the pre-determined characteristic comprises the fan characteristic curve of the impeller, the fan characteristic curve being the relationship between the pressure difference across the fan-impeller and the volume flow rate through the fan-impeller

Preferably the fan assembly is operative such that the volume flow rate of fluid remains substantially constant over time, independent of changes to the fluid flow resistance.

Preferably the pressure sensing means is mounted on the fan housing.

Most preferably the pressure sensing means is mounted within the fan housing so as to be internal of the periphery of fan housing.

Preferably the fan-impeller comprises a backward curved impeller of the type comprising a plurality of curved impeller blades that inclined away from the direction of rotation of the fan-impeller.

According to a second aspect of the invention there is provided a method of controlling a fan-impeller of the type to be disposed between a fluid inlet and a fluid outlet of a fan assembly, the method comprising steps of using pressure sensor means to measure the fluid pressure upstream and downstream of the fan-impeller, using control means to process pressure measurements from the pressure sensor means to determine a pressure difference across the fan-impeller and to process the determined pressure difference according to an algorithm to calculate the current volume flow rate of fluid through the fan-impeller, comparing the calculated current volume flow rate with a desired volume flow rate of fluid and, if necessary, adjusting the fan-impeller speed such that the desired volume flow rate of fluid is achieved.

Other aspects of the present invention may include any combination of the features or limitations referred to herein.

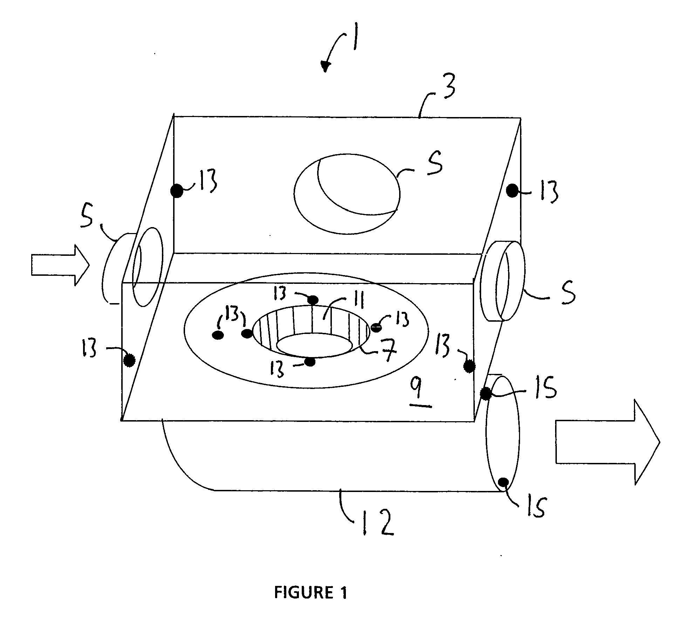

The present invention may be carried into practice in various ways, but embodiments will now be described by way of example only with reference to the accompanying drawing which is a perspective view of a fan assembly in accordance with the present invention in the form of a domestic central air extractor unit.

A fan assembly 1 comprises, in this example, a domestic central air extractor unit comprising an oblong housing 3 provided with three circular inlet apertures 5 and a single circular further outlet aperture 7 formed in the base 9 of the housing 3. A fan-impeller 11 is mounted on the housing between the further aperture 7 and an outlet duct 12. The housing thus comprises an inlet plenum upstream of the fan-impeller 11 whilst the duct 12 is downstream of the fan-impeller 11. The inlet apertures 5 are joined to ducts (not shown) that connect the housing 3 to various spaces, such as rooms, within a building.

The fan-impeller 11, which in this example comprises a backward curved impeller, is connected to a supply of electricity (not shown) and electronic control means (not shown) which is operative to control the speed of the fan-impeller 11 and thus the volume flow rate of air through the fan-impeller 11.

The fan assembly 1 further comprises pressure sensing means comprising at least one upstream pressure sensor 13 and at least one downstream pressure sensor 15. It will be noted that the figure shows a plurality of examples of possible locations for the upstream and downstream sensors 13, 15 and that not all locations need be used. Any number of upstream and downstream pressure sensors 13, 15 may be used as desired, including only one upstream sensor 13 and one downstream sensor 15.

The Figure shows that an upstream pressure sensor 13 may be provided around the periphery of the fan-impeller 11 inlet, that is at further aperture 7, or on the base 9 of the housing 3 radially outwardly spaced from the further aperture 7, or radially outwardly spaced from one or other of the inlet apertures 5.

A downstream pressure sensor 15 may be provided at any desired position on the outlet duct 13, or around the periphery of the outlet (not shown) of the fan-impeller 11 at the base 9 of the housing 3. The positions of the downstream pressure sensors 15 are shown as examples, any other desired sensor position could alternatively or additionally be used.

It has been found that by the selection of at least one upstream and downstream pressure measuring point in a fan housing 3 around a preferably backward curved fan-impeller 11 that a relationship exists between the pressure difference across the fan-impeller 11 and a property of the fan-impeller 11 called a fan characteristic curve. The fan characteristic curve is the relationship between the pressure difference across the fan-impeller 11 and the volume flow rate of fluid through the fan impeller 11.

The pressure difference is determined using pressure measurements from the upstream and downstream pressure sensors 13, 15 using, for example, a simple pressure differential device such as those used in domestic appliances. Such a device is typically manufactured in high numbers and is thus of relatively low cost.

A pressure differential output signal from the pressure differential device is sent to a microprocessor, the pressure differential device and the microprocessor comprising further parts of the control means.

The microprocessor comprises an algorithm that includes the predetermined fan characteristic curve of the fan-impeller 11 concerned. The algorithm uses the pressure differential output signal and the predetermined fan characteristic curve to calculate the current volume flow rate of fluid through the fan-impeller 11. This calculated current volume flow rate is compared, by the algorithm, to a pre-stored value indicative of a desired volume flow rate of fluid that is in line with the rate specified by building regulations.

The algorithm is used to establish if the calculated current volume flow rate is greater or less than the desired volume flow rate. A fan-impeller speed control signal is then sent, if necessary, from the microprocessor to a motor speed control device to alter the speed of the fan-impeller 11 such that the desired volume flow rate of fluid is achieved.

The pressure difference may be monitored continuously or at intervals to suit the application.

The fan assembly 1, and the method of controlling a fan assembly, could be used in conjunction with any type of fan-impeller including, for example, an in-line duct fan-impeller.

The principal could equally be applied to a heat recovery fan assembly comprising two fan-impellers, one supplying air and the other extracting air from a building, mounted in the same fan housing.

Whilst the above example relates to air, the fan assembly 1 and method of controlling a fan assembly could be used with any other desired fluid whose volume flow rate is to be controlled.

## Claims

1. A fan assembly (1) comprises a fan housing (3) having a fluid inlet (5) and a fluid outlet (7), a fan-impeller (11) being disposed between the fluid inlet (5) and fluid outlet (7), the fan assembly (1) further comprising pressure sensor means (13, 15) operative to measure the fluid pressure upstream and downstream of the fan-impeller (11), the fan assembly (1) further comprising control means operative to process pressure measurements from the pressure sensor means (13, 15) to determine a pressure difference across the fan-impeller (11) and to process the determined pressure difference according to an algorithm to calculate the current volume flow rate of fluid through the fan-impeller (11), wherein the algorithm calculates the current volume flow rate from the determined pressure difference and the fan characteristic curve of the impeller (11), the fan characteristic curve being the relationship between the pressure difference across the fan-impeller (11) and the volume flow rate through the fan-impeller (11), the control means being further operative to compare the calculated current volume flow rate with a desired volume flow rate of fluid and, if necessary, to adjust the fan-impeller (11) speed such that the desired volume flow rate of fluid is achieved.

2. The fan assembly (1) of claim 1 operative such that the volume flow rate of fluid remains substantially constant over time, independent of changes to the fluid flow resistance.

3. The fan assembly (1) of claim 1 or claim 2 wherein the pressure sensing means (13, 15) is mounted on the fan housing (3).

4. The fan assembly (1) of claim 3 wherein the pressure sensing means (13, 15) is mounted within the fan housing (3) so as to be internal of the periphery of fan housing (3).

5. The fan assembly (1) of any one of the preceding claims wherein the fan-impeller (11) comprises a backward curved impeller of the type comprising a plurality of curved impeller blades that inclined away from the direction of rotation of the fan-impeller (11).

6. A method of controlling a fan-impeller (11) of the type to be disposed between a fluid inlet (5) and a fluid outlet (7) of a fan assembly (1), the method comprising steps of using pressure sensor means (13, 15) to measure the fluid pressure upstream and downstream of the fan-impeller (11), using control means to process pressure measurements from the pressure sensor means (13, 15) to determine a pressure difference across the fan-impeller (11), wherein and to process the determined pressure difference according to an algorithm to calculate the current volume flow rate of fluid through the fan-impeller (11) the algorithm calculates the current volume flow rate from the determined pressure difference and the fan characteristic curve of the impeller (11), the fan characteristic curve being the relationship between the pressure difference across the fan-impeller (11) and the volume flow rate through the fan-impeller (11), the control means comparing the calculated current volume flow rate with a desired volume flow rate of fluid and, if necessary, adjusting the fan-impeller (11) speed such that the desired volume flow rate of fluid is achieved.
